# EUROPÄISCHE PATENTANMELDUNG

(11) **EP 3 537 112 A1**
(43) Veröffentlichungstag der Anmeldung: **11.09.2019**
(21) Anmeldenummer: 18160630.2
(22) Anmeldetag: 08.03.2018
(51) Int. Cl.: G01F 1/66, G01F 5/00, G01F 7/00, G01F 15/14, G01F 15/18

(54) **FLUIDDURCHFLUSSMESSER**

(71) Anmelder: Energoflow AG, 4600 Olten (CH)
(72) Erfinder: STETSENKO, Andrii, 61051 Kharkov (UA); GLOVA, Iurii, 61204 Kharkov (UA); NEDZELSKYI, Sergii, 61057 Kharkov (UA)
(74) Vertreter: Jeck, Anton

(57) **Zusammenfassung**

Die vorliegende Erfindung bezieht sich auf einen kompakten Großbereich-Durchflussmesser, dessen Wirkungsweise auf Anwendung von zwei unterschiedlichen Fluiddurchflussmessverfahren beruht. Einer der Durchflussmesser ist im unteren und der andere im oberen Teil des Durchflussmessbereichs besonders wirksam. Dadurch wird ein großer Messbereich mit einem Minimal-Maximal-Verhältnis des messbaren Durchflusses von 1:1000 und mehr erreicht. Die Anwendung von zwei Messverfahren (Messprinzipien) macht es auch möglich, die Funktion des Durchflussmessers zu prüfen. Dafür werden diese zwei Verfahren im mittleren Teil des Bereichs verglichen und zwar da, wo die nach unterschiedlichen Verfahren erhaltenen Messergebnisse sich überlappen. Die Überdeckung der Messstrecken für Durchflussmesser mit unterschiedlichen Messverfahren sorgt für die Verminderung der Abmessungen des Durchflussmessers und seine Kompaktheit.

## Beschreibung

Die Erfindung bezieht sich auf Fluiddurchflussmesser nach dem Oberbegriff des Anspruchs 1. Solche Durchflussmesser/Zähler sind zur Durchflussmengenmessung und/oder Fluidgeschwindigkeitsmessung des über ihren Innenraum fließenden Fluids in einem breiten Durchflussbereich vorgesehen.

Bekannte Fluidmessverfahren haben eingeschränkte Durchflussbereiche. Die Durchflussbereichsverhältnisse zwischen dem Verfahren des variablen Druckgefälles und dem Coriolis-Verfahren betragen in der Regel 1:10. Das Minimal-Maximal-Durchflussverhältnis beim Hitzdraht-Messverfahren beträgt 1:15. Beim Turbinen- und Wirbel-Durchflussmessverfahren beträgt das Verhältnis 1:20, beim Rotationsverfahren liegt es bei 1:100. Beim Ultraschallverfahren kann dieses Verhältnis 1:150 betragen.

Soll der Flüssigkeits- und Gasdurchfluss in einem größeren Messbereich gemessen werden, muss man mehrere Durchflussmesser in verschiedenen Baugrößen und mit unterschiedlichen Verläufen der Strömungsmessungen anwenden. Das erschwert wesentlich die Konstruktion der Erfassungsbaugruppe, vergrößert ihre Abmessungen und benötigt viel Zeit für die Wartung und das Umrüsten.

Bei bekannten Vorrichtungen für die Messbereichserweiterung handelt es sich um Zähler, deren Gehäuse einen oder mehrere Massenmesser enthält, wie beispielsweise in den Druckschriften EP2824432 A2 und CN104061973A beschrieben. Der Durchflussbereich der Gesamtströmung bei solchen Zählern hängt von der Anzahl und der Baugröße der im Gehäuse eingebauten Massenmesser ab. Diese technische Lösung weist jedoch eine äußerst komplizierte Bauweise auf und ist wegen zahlreicher Strömungswächter technisch aufwendig. Die Strömungswächter sind erforderlich, um große Durchflussmengen zu messen. Somit hat diese technische Lösung gewisse Einschränkungen hinsichtlich der Anwendung als kleiner (Haushalts-) Zähler. Ein weiterer Mangel bekannter Vorrichtungen ist die begrenzte "innere Skalierbarkeit" der Strömungswächter. Sie müssen für jede einzelne Klasse der Durchflussmesser entwickelt und hergestellt werden. Ein weiterer Nachteil dieser Lösung besteht darin, dass die Unsicherheit der Durchflussmengenmessung der Gesamtströmung sowohl die Korrelationsfehler dieser Gesamtströmung mit dem einzelnen messfähigen Strömungswächter als auch die Summe der Unsicherheiten dieser einzelnen Strömungswächter einschließt.

In der CN102183274A und CN102735300A ist ein Durchflussmesser mit einem Gehäuse in Form einer Einschnittbaugruppe (eingebundener Rohrabschnitt) beschrieben. Diese Einschnittbaugruppe nimmt Strömungswächter auf, welche nach unterschiedlichen Messverfahren arbeiten, z. B. nach dem Wirbel- und Ultraschallmessverfahren. Eines der Messverfahren (Ultraschallmessung) sorgt für die Strömungsmessung mit einer niedrigen Geschwindigkeit (0,3 - 10 m/s). Das andere Verfahren (Wirbelmessverfahren) misst die Strömungsgeschwindigkeit im Bereich zwischen 5 und 45 m/s. Diese Lösung hat den Nachteil, dass die Strömungswächter aufeinanderfolgend an entgegengesetzten Enden der Einschnittbaugruppe eingebaut sind. Das verursacht eine Vergrößerung ihrer Längenmaße und eine platzraubende Konstruktion. Folglich können diese Messgeräte als Haushaltszähler nicht eingesetzt werden. Die Anordnung eines der Strömungswächter (des Wirbelströmungswächters) in der Mitte der Einschnittbaugruppe zwischen den Ultraschall-Strömungswächtern sorgt zwar für die Verminderung der Längenmaße der Konstruktion, bringt jedoch zusätzliche Strömungsstörungen in der Messstrecke ein. Das führt zu einer Verschlechterung der messtechnischen Eigenschaften des Zählers.

Ausgehen von dem obigen Stand der Technik liegt der Erfindung die Aufgabe zugrunden, hier Abhilfe zu schaffen.

Diese Aufgabe wird durch den Fluiddurchflussmesser mit den Merkmalen des Anspruchs 1 gelöst.

Durch die Erfindung wird ein kompakter kleiner Großbereich-Fluiddurchflussmessers bereitgestellt, der neben der Anpassbarkeit auf einen bestimmten Messbereich auch in der Lage ist, einen größeren Messbereich als bisherige Durchflussmesser abzudecken.

Man erkennt, dass die Erfindung jedenfalls dann verwirklicht ist, wenn es sich um einen Fluiddurchflussmesser mit einer gemeinsamen Messstrecke für Strömungswächter mit unterschiedlichen Messverfahren für Strömungsgeschwindigkeit und Fluiddurchfluss handelt, der folgende Merkmale aufweist:
- ein Gehäuse mit einer zur Geometrie eines Strömungswächters komplementären Form seines Innenraums, zwei den Innenraum zumindest teilweise begrenzende Böden und einen im Innenraum befindlichen gewölbten Teil mit einer Geometrie, der eine Strömungsausbildung sicherstellt,
- mindestens einen Ultraschall-Strömungswächter, der innerhalb des Gehäuses des Durchflussmessers so angeordnet ist, dass die Messstrecke durch einen Innenteil eines weiteren Strömungswächters läuft,
- einen Strömungswächter mit einer anderen Wirkungsweise, der im Gehäuse des Fluiddurchflussmessers eingebaut ist,
- eine Anpassungseinheit zur Anpassung verschiedener Durchmesser des Strömungswächters und der Austrittsöffnung des Durchflussmessers,
- einen Einlasskanal für die Strömung des in den Durchflussmesser fließenden und zu messenden Fluids,
- einen Auslasskanal für die Strömung des aus dem Durchflussmesser fließenden Fluids.

Der kompakte Großbereich-Fluiddurchflussmesser mit einer Konfiguration zur Strömungsausbildung und einer gemeinsamen Messstrecke für Durchflussmesser mit unterschiedlichen Messverfahren ist dafür vorgesehen, Strömungsgeschwindigkeit und Fluiddurchfluss in einem großen Durchflussbereich mit einem Minimal-Maximal-Verhältnis des messbaren Durchflusses von 1:1000 und mehr zu messen. Dieser Durchflussmesser vereinigt die Vorteile des Zählers, dessen Konstruktion die Unempfindlichkeit gegen die Fluidstörungen am Einlass sicherstellt und des Durchflussmessers mit einem Messbereich, welcher die Messbereiche des bekannten Standes der Technik wesentlich überschreitet.

Weitere Verbesserungen ergeben sich aus den Merkmalen der Unteransprüche.

In einer ersten für die Funktion der Vorrichtung vorteilhaften Ausgestaltung mit den Merkmalen des Anspruchs 2, weist der Innenraum des Gehäuses eine zylindrische, eine elliptische oder eine quaderförmige Gestalt mit einem abgerundeten Boden auf.

Dabei ist die Querschnittsfläche des Gehäuseinnenraums mehrfach größer (optimalerweise mindestens 10-mal größer) als die Querschnittsfläche des Einlasskanals des Durchflussmessers und er Austrittsöffnung des Strömungswächters. Dadurch fließt der ausgebildete, stabile und gleichmäßige Fluidstrom in Richtung des Auslaufkanals und ist ein laminarer Fluidfluss erreicht.

In einer zweiten für die Funktion der Vorrichtung vorteilhaften Ausgestaltung mit den Merkmalen des Anspruchs 3, weist der Innenraum in der Mitte des Bodens mit der Abrundung entweder einen im Boden nach innen gewölbten Teil in Form einer Glocke oder einen in der Nähe des Bodens angeordneten gewölbten Teil der kugelförmig ist auf. Dadurch umfließt das Fluid beim Durchgang durch den Innenraum den gewölbten Teil entsprechend seiner Geometrie (Konfiguration) und läuft in der Mitte des Innenraums zur Eintrittsöffnung des Strömungswächters hin zusammen. Dabei fließt die gebildete Fluidströmung durch das Innere des Strömungswächters und tritt über einen Auslasskanal des Durchflussmessers hinaus, wodurch insgesamt ein laminarer Fluidfluss erreicht ist.

In einer dritten für die Erweiterung des Messbereichs der Vorrichtung vorteilhaften Ausgestaltung mit den Merkmalen des Anspruchs 4, ist ein erster Ultraschall-Strömungswächter innerhalb des gewölbten Teils und/oder ein zweiter Ultraschall-Strömungswächter im unteren Teil des Innenraums nach der Austrittsöffnung des Strömungswächters angeordnet. Dabei sind diese so angeordnet, dass ein akustischer Kanal über die Mittelachse des Strömungswächters läuft, wobei die Messstrecken der Strömungswächters sich überdecken und wodurch der Fluidfluss ungestört bleibt und der Messbereich erweitert ist.

In einer vierten für die Funktion und Konfiguration der Vorrichtung vorteilhaften Ausgestaltung mit den Merkmalen des Anspruchs 5, ist der Strömungswächter, der ein zur Strömungsgeschwindigkeit des Fluids proportionales Signal aufbereitet entlang der Mitte der Achse des Innenraums so angeordnet, dass die laminare Strömung durch ihn hindurchfließt und aus dem Auslasskanal des Durchflussmessers austritt. Dabei können als Strömungswächter beliebige bekannte Verdrängungs- oder Massenmesser für Durchflussmengen- oder Geschwindigkeitsmessungen beliebiger Funktionsweise eingesetzt werden, die der Baugröße des Innenraums des Gehäuses des Durchflussmessers entsprechen. Dadurch ist der laminare Fluidfluss und das wesentliche Messprinzip der Erfindung verwirklicht sowie die Konfiguration des Durchflussmessers auf den tatsächlichen Messzweck in der Produktion bzw. im praktischen Einsatz vereinfacht.

In einer fünften für die Erweiterung des Messbereichs der Vorrichtung vorteilhaften Ausgestaltung mit den Merkmalen des Anspruchs 6, beruht seine Wirkungsweise auf der Anwendung von zwei unterschiedlichen Messverfahren, wobei eines davon im unteren und das andere im oberen Teil des Durchflussmessbereichs besonders wirksam ist, wobei dadurch ein großer Messbereich mit einem Minimal-Maximal-Verhältnis des messbaren Durchflusses von 1:1000 und mehr erreicht wird und wobei die Anwendung von zwei Messverfahren es auch ermöglicht, die Funktion des Durchflussmessers zu prüfen, wofür diese zwei Verfahren im mittleren Teil des Bereichs verglichen werden, in dem sich die nach den unterschiedlichen Verfahren erhaltenen Messergebnisse überlappen.

In einer sechsten für die Erweiterung oder Verschiebung des Messbereichs der Vorrichtung vorteilhaften Ausgestaltung mit den Merkmalen des Anspruchs 7, bildet ein Rohr einen zusätzlichen Durchströmungs-Umlaufkanal, welcher zwischen der Außenfläche des Strömungswächters und der Innenfläche des zusätzlichen Rohres gebildet ist, wodurch die Strömung des zu messenden Fluids aufgeteilt ist, wobei ein Teil der Strömung durch das Innere des Strömungswächters fließt und ein anderer Strömungsteil den Durchströmungs-Umlaufkanal passiert.

In einer siebten für die Funktion und Konfiguration der Vorrichtung vorteilhaften Ausgestaltung mit den Merkmalen des Anspruchs 8, ist die Anpassungseinheit im Innenraum in der Mitte des Bodens des Gehäuses angeordnet, der dem Boden mit der Abrundung entgegengesetzt ist. Dadurch ist der laminare Fluidfluss verwirklicht sowie die Konfiguration des Durchflussmessers auf den tatsächlichen Messzweck in der Produktion bzw. im praktischen Einsatz vereinfacht.

In einer achten für die Funktion der Vorrichtung vorteilhaften Ausgestaltung mit den Merkmalen des Anspruchs 9, ist eine Strömungsaufbereitungseinrichtung am Boden des Innenraums angeordnet und weist die Form eines Gitters auf. Dabei ist das Gitter am Boden des Innenraums so angeordnet, dass das zu messende Fluid durch den Einlasskanal und über die Strömungsaufbereitungseinrichtung fließt und in den Innenraum des Gehäuses des Durchflussmessers gelangt. Dabei zerschneidet die Strömungsaufbereitungseinrichtung die Gesamtströmung des zu messenden Fluids in zahlreiche Einzelströmungen und der laminare Fluidfluss ist verwirklicht.

In einer neunten für die Sicherheit der Vorrichtung vorteilhaften Ausgestaltung mit den Merkmalen des Anspruchs 10, weist das Gehäuse einen Fluidleckage-Erkennungssensor auf, der in elektrischer Verbindung mit einem Elektronikmodul und/oder einem Sperrventil ist.

In einer zehnten für die Funktion der Vorrichtung vorteilhaften Ausgestaltung mit den Merkmalen des Anspruchs 11, weist der Einlass des Strömungswächters eine trichterförmige Form auf und steht in fluidstrombildender Verbindung mit dem gewölbten Teil.

In einer elften für die Funktion der Vorrichtung vorteilhaften Ausgestaltung mit den Merkmalen des Anspruchs 12, sind der Strömungswächter und die Anpassungseinheit anpassbar, wobei die Anpassungseinheit entsprechend dem verwendeten Strömungswächter anpassbar ist.

In einer zwölften für die Funktion der Vorrichtung vorteilhaften Ausgestaltung mit den Merkmalen des Anspruchs 13, ist im Einlasskanal ein Grobfilter angeordnet.

Die Erfindung wird nachfolgend anhand eines Ausführungsbeispiels unter Bezugnahme auf die Zeichnungen näher erläutert.
Es zeigen:
- Fig. 1: das Schnittbild eines Fluiddurchflussmessers in einer ersten Ausführungsform mit der Konfiguration zur Strömungsausbildung und Strömungswächtern mit unterschiedlichen Messverfahren,
- Fig. 2: zeigt ein vereinfachtes Bild der gemeinsamen Messstrecke und den Weg des akustischen Kanals der Ultraschall-Strömungswächter,
- Fig. 3: stellt eine Ausgestaltung des Fluiddurchflussmessers in einer zweiten Ausführungsform als Einschnittbaugruppe dar.
- Fig. 4: zeigt eine Ausgestaltung des Fluiddurchflussmessers mit einem zusätzlichen Durchströmungs-Umlaufkanal für das zu messende Medium.

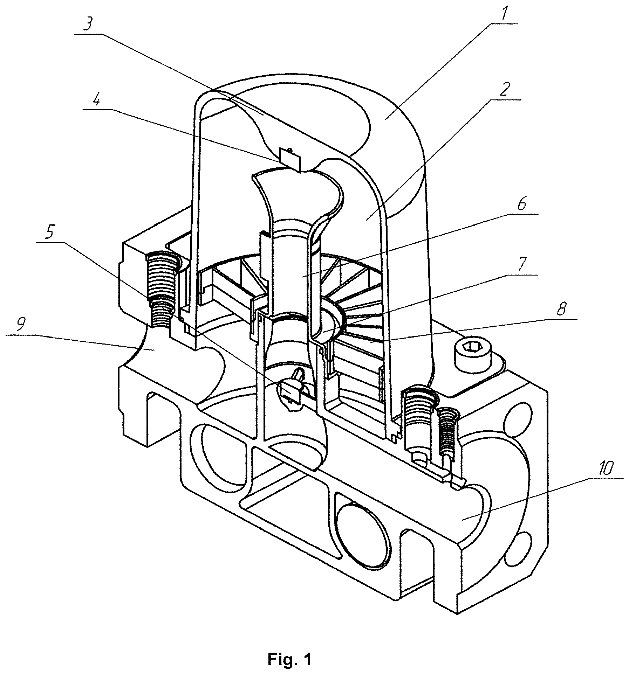

Beim kompakten Großbereich-Fluiddurchflussmesser mit der Konfiguration zur Strömungsausbildung und der gemeinsamen Messstrecke für Strömungswächter mit unterschiedlichen Messverfahren handelt es sich um eine Vorrichtung, die folgende Komponenten aufweisen kann (Fig. 1):
- ein Gehäuse 1 mit einem Innenraum 2 und einem nach innen gewölbten Teil 3 mit einer Konfiguration, welche die Strömungsausbildung sicherstellt,
- einen oder zwei Ultraschall-Strömungswächter 4, 5, die im Gehäuse des Durchflussmessers eingebaut und zur Messung der Fließgeschwindigkeit des Fluids vorgesehen sind,
- einen Strömungswächter 6 mit einer anderen Wirkungsweise (z. B. nach dem Hitzdraht-Messverfahren), der im Gehäuse 1 des Durchflussmessers eingebaut und zur Messung der Fließgeschwindigkeit des Fluids vorgesehen ist, wobei der Durchflussmesser 4 einen trichterförmigen Einlass aufweist,
- eine Anpassungseinheit 7, um verschiedene Durchmesser des Strömungswächters 6 und der Austrittsöffnung des Durchflussmessers aneinander anzupassen,
- eine Strömungsaufbereitungseinrichtung 8, um die Strömung des messbaren Fluids zu durchschneiden und zu beruhigen (stabilisieren),
- einen Einlasskanal 9 für die Strömung des in den Durchflussmesser fließenden und zu messenden Fluids,
- einen Auslasskanal 10 für die Strömung des aus dem Durchflussmesser fließenden Fluids,
- ein Elektronikmodul,
- einen Grobfilter im Einlasskanal 9,
- ein Sperrventil im Einlasskanal 9,
- einen Fluidleckage-Erkennungssensor.

Bei dem Gehäuse 1 des Durchflussmessers handelt es sich um einen Behälter 2, der einen für das Fluid undurchlässigen (fluiddichten) Strömungsraum bildet. Dieser Innenraum (Innenkammer) 2 ist vorgesehen, um die Fluidströmung auszubilden und ihre Geschwindigkeit zu messen. Der Innenraum 2 des Gehäuse 1 weist eine zur Geometrie des Strömungswächters 6 komplementäre Form auf. Dieser kann beispielsweise in Form eines Zylinders, einer elliptischen Röhre, eines Quaders oder einer beliebigen anderen Form ausgebildet sein, wobei einer seiner Böden abgerundet ist. Wie in einem ersten Ausführungsbeispiel in Fig. 1 dargestellt, hat einer der Zylinderböden einen nach innen gewölbten Teil 3. Das Gehäuse 1 weist einen Haupteinlasskanal 9 und einen Hauptauslasskanal 10 auf. Der Haupteinlasskanal 9 fördert die Fluidströmung in den Innenraum 2. Der Hauptauslasskanal 10 ist für die aus dem Innenraum 2 fließende Fluidströmung vorgesehen. Im Gehäuse 1 ist eine Strömungsaufbereitungseinrichtung 8 fest eingebaut. Sie ist vorgesehen, um die Strömung des messbaren Fluids zu durchschneiden und zu beruhigen (stabilisieren). Das Gehäuse 1 nimmt des Weiteren einen oder zwei Ultraschall-Strömungswächter 4, 5 und einen Strömungswächter 6 mit einer anderen Wirkungsweise auf. Einer der Ultraschall-Strömungswächter befindet sich in einer Aufnahmestelle innerhalb des nach innen gewölbten Teils 3. Der zweite Ultraschall-Strömungswächter ist in einer Aufnahmestelle im unteren Teil des Innenraums 2 innerhalb der Anpassungseinheit 7 eingebaut. Der Strömungswächter 6 mit einer anderen Wirkungsweise sitzt in der Mitte des genannten Gehäuses 1 des Durchflussmessers. Das Elektronikmodul zur Auswertung der Messsignale, der Grobfilter zur Reinigung des Fluids, das Sperrventil zur Unterbrechung des Fluidflusses sowie der Fluidleckage-Erkennungssensor zur Erkennung eines Gefahrenfalles sind in Fig. 1 nicht dargestellt.

Der Durchflussmesser hat die folgende Funktionsweise:
- das messbare Fluid kommt zuerst in den Einlasskanal 9, strömt durch den Grobfilter, fließt durch die Strömungsaufbereitungseinrichtung 8 und wird in zahlreiche Strömungen aufgeteilt;
- die Strömungen verteilen sich über den gesamten Umfang des Innenraums 2, fließen seine Mittenachse folgend von einem Boden zum anderen hin über den Raum entlang, der durch die Innenfläche der Wände des Gehäuses 1 und die Außenfläche des Strömungswächters 6 gebildet ist. Danach umströmen sie den nach innen gewölbten Teil 3, indem sie seiner Geometrie (Konfiguration) folgen. Am trichterförmigen Einlass des Strömungswächters 6 laufen sie zu einer ruhigen gleichmäßigen Einheitsströmung zusammen. Das stellt die günstigsten Bedingungen sicher, um eine hochpräzise Geschwindigkeitsmessung zu erreichen;
- danach wird die Strömung vom trichterförmigen Einlass des Strömungswächters 6 weiter gebündelt, wodurch auch ihre Strömungsgeschwindigkeit erhöht und die Störanfälligkeit der Messung im Strömungswächter 4 vermindert wird
- anschließend fließt die Strömung durch das Innere des Strömungswächters 6 und tritt über den Auslasskanal 10 des Durchflussmessers hinaus;
- während die Fluidströmung durch das Innere des Strömungswächters 6 fließt, bereitet der Strömungswächter 6 ein Signal auf, das zur Strömungsgeschwindigkeit proportional ist.

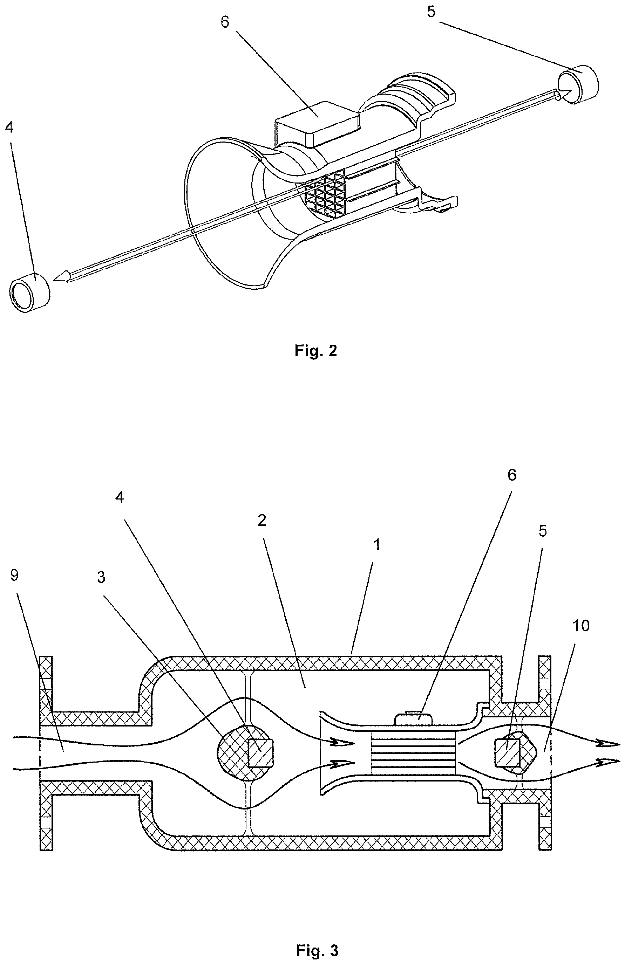

Eine kennzeichnende Besonderheit der Erfindung ist die Anwendung von Ultraschall-Strömungswächtern 4, 5. Einer 4 davon ist innerhalb des nach innen gewölbten Teils 3 eingebaut. Der Zweite 5 ist nach dem Strömungswächter 6 und zwar an seiner Austrittsöffnung angeordnet. Wesentlicher Unterschied zu herkömmlichen Durchflussmessern ist die Anordnung der Strömungswächter 4, 5 mit einer gemeinsamen Messstrecke, die durch den Innenteil des Strömungswächters 6 läuft, ohne seine Funktion zu beeinflussen (Fig. 2). Somit wird die räumliche Überdeckung des Messkanals der Ultraschall-Strömungswächter 4, 5 und des Messkanals des Strömungswächters 6 erreicht, so dass eine gemeinsame Messstrecke entsteht.

Die genannten Unterschiede stellen die kompakte Anordnung der Strömungswächter 4, 5, 6 im Innenraum 2 sicher. Folglich werden auch Kleinmaße des eigentlichen Durchflussmessers erreicht, wobei seine hohen messtechnischen Eigenschaften erhalten bleiben.

Die von den Strömungswächtern 4, 5 eingehenden Messsignale werden durch ein Elektronikmodul des Durchflussmessers empfangen und ausgewertet. Danach wird ein Signal erzeugt, welches zum Fluidstrom proportional ist.

Das Gehäuse 1 besteht aus zwei Teilen (Fig. 1):
- einem festen Teil (Tragkörper), in dem sich der Einlasskanal 9, der Grobfilter, das Sperrventil, der Auslasskanal 10, die Strömungsaufbereitungseinrichtung 8, die Anpassungseinheit 7 und die Strömungswächter 4, 5, 6 befinden;
- einem beweglichen Teil in Form eines Zylinders (einer Haube) mit einer Abrundung eines der Zylinderböden. Der Zylinder ist um seine Mittenachse drehbar. An dem äußeren beweglichen Teil des Gehäuses 1 kann das Elektronikmodul befestigt werden, dessen Frontteil ebenfalls um seine Mittenachse drehbar ist.

Bei der Strömungsaufbereitungseinrichtung 8 handelt es sich um ein Gitter. Das Gitter ist im zylindrischen unteren Teil des Innenraums 2 so angeordnet, dass das messbare Fluid durch die Strömungsaufbereitungseinrichtung 8 über einen Einlasskanal 9 fließt und in den Innenraum 2 des Gehäuses 1 des Durchflussmessers eintritt. Bei dem Gitter der Strömungsaufbereitungseinrichtung 8 handelt es sich um einen Satz von vorzugsweise 21 Schaufeln mit solchen Abmessungen, dass sie höchstens 23% der gesamten Querschnittsfläche des Innenraums 2 abdecken. Die Strömungsaufbereitungseinrichtung 8 sorgt für das Durchschneiden der Strömung des messbaren Fluids, schafft die Bedingungen für die Erzeugung einer ruhigen gleichmäßigen Strömung und vermindert somit beachtlich die Effekte, welche durch die Hochenergie der Turbulenzströmung am Einlass des Strömungswächters 6 bedingt sind. Die Anwendung der Strömungsaufbereitungseinrichtung 8 in Kombination mit der beschriebenen Konfiguration des Innenraums 2 gewährleistet die Beruhigung (Stabilisierung) der Strömung und den Ausgleich ihrer Geschwindigkeitskennlinie. Somit entfallen die äußeren Einrichtungen (Adapter), die eine ungestörte Fluidströmung erzeugen müssen, bei einer ansonsten beliebigen, sogar starken Verzerrung und Störung des messbaren Fluids am Einlass des Durchflussmessers.

Ein weiteres kennzeichnendes Merkmal des Durchflussmessers ist die Anpassungseinheit 7 im unteren Innenteil des Gehäuses (nach der Austrittsöffnung des Strömungswächters 6). Die Anpassungseinheit 7 dient dazu, die Durchmesser des Strömungswächters 6 und der Austrittsöffnung des Durchflussmessers aneinander anzupassen. Diese Anpassungseinheit erlaubt es, je nach dem benötigten Bereich der messbaren Durchflussmengen im Durchflussmesser, Strömungswächter 6 mit verschiedenen Durchmessern anzuwenden, wobei die Anpassungseinheit auf den Strömungswächter anpassbar sein kann.

Beim Einlasskanal 9 für die Fluidströmung handelt es sich um eine Öffnung, einen Kanal, der die Fluidströmung in den Innenraum 2 des Gehäuses 1 des Durchflussmessers fördert.

Der Auslasskanal 10 ist vorgesehen, um die aus dem Innenraum 2 des Gehäuses 1 des Durchflussmessers fließende Fluidströmung abzuleiten.

Das Elektronikmodul dient zur Feststellung, Bearbeitung und Speicherung von Werten bzw. den Ergebnissen der Bearbeitung der Werte, die von Strömungswächtern 4, 5, 6 übermittelt werden und zur elektronischen Steuerung. Der Typ des Elektronikmoduls kann abhängig von Bedürfnissen der Realisierung variieren, und übt keinen wesentlichen Einfluss auf diese Erfindung aus. Das Elektronikmodul ist mit den Strömungswächtern 4, 5, 6 durch eine physikalische Datenleitung (der Begriff "physikalische Datenleitung" bedeutet hier eine Leitung eines oder mehrerer Festkörperverbinder (wie Stecker, Verdrahtung) oder eine Leitung drahtloser Verbindung (Radio, Bluetooth usw.) verbunden. Das Elektronikmodul kann sich auf der Außenseite des Gehäuses 1 des Zählers oder im Gehäuse befinden.

Im Einlasskanal 9 des Zählers kann sich ein Grobfilter befinden, der zur Reinigung des Fluids von Fremdstoffen dient, die den Durchflussmesser 4, 5, 6 oder die Strömungsaufbereitungseinrichtung 8 verschmutzen oder beschädigen können.

Weiterhin kann sich im Einlasskanal 9 ein Sperrventil befinden, das für das Schließen (Absperren) des Fluidstroms aufgrund eines Signals sorgt, das vom Elektronikmodul stammt.

Der ebenfalls optionale Fluidleckage-Erkennungssensor dient zur sicheren Feststellung der Fluidleckage aus dem Zähler, zum Auslösen des Sperrventils und damit zum Abbruch der Fluidzufuhr in den Zähler. Dieser Sensor ist von großer Bedeutung für die Sicherstellung der Betriebssicherheit von brennbaren Medien, deren Leckage zu einem Unfall mit schwerwiegenden Folgen führen kann. Die Feststellung einer Leckage und Absperrung des Fluidstroms kann aber auch unabhängig vom Fluiddurchflussmesser erfolgen.

Beim Strömungswächter 6 handelt es sich um ein Messgerät (Messgeber, Durchflussmesserröhrchen) zur Messung von Volumenstrom oder Strömungsgeschwindigkeit, das nach einer beliebigen Funktionsweise gebaut ist. Der Strömungswächter wird in der Mitte des zylindrischen Innenraums 2 des Gehäuses 1 des Durchflussmessers so angeordnet, dass das messbare Fluid über den Einlasskanal 9 und durch die Strömungsaufbereitungseinrichtung 8 fließt und in zahlreiche Strömungen zerschnitten wird. Dann fließt diese Strömung durch den Innenraum 2, umströmt den nach innen gewölbten Teil 3 und läuft zu einer ruhigen gleichmäßigen Einheitsströmung zusammen. Danach fließt diese Fluidströmung durch den Strömungswächter 6, durch den Auslasskanal 10 und tritt aus dem Durchflussmesser hinaus. Als Strömungswächter 6 können beliebige bekannte Verdrängungs- oder Massenmesser für Durchflussmengen- oder Strömungsgeschwindigkeitsmessungen eingesetzt werden (Turbinenzähler, Rotationszähler, anemometrische Messgeräte usw.), deren Baugrößen denen des Innenraums 2 des Gehäuses 1 des Durchflussmessers entsprechen. Daher bedarf ein solcher Strömungswächter 6 keiner weiteren detaillierten Beschreibung. In jedem Fall erkennt der Strömungswächter 6 die Kenngrößen, die auf die Menge des über die Rohrleitung bzw. durch den Durchflussmesser fließenden Fluids direkt oder indirekt hinweisen.

Gleichzeitig mit der Messung der Strömung durch den Strömungswächter 6, wird die Strömung nach dem Ultraschall-Verfahren gemessen. Die Ultraschall-Strömungswächter 4, 5 sind so angeordnet, dass deren akustischer Kanal über die Mittelachse des Strömungswächter 6 läuft, ohne seine Funktion zu beeinflussen (Fig. 2). Eine solche Anordnung der Ultraschall-Strömungswächter 4, 5 und des Strömungswächters 6 stellt eine Reihe von Vorteilen sicher: die günstigsten Bedingungen für die Messung nach dem Ultraschall-Verfahren, die kompakte Anordnung der Strömungswächter im Gehäuse des Durchflussmessers und folglich die Kleinmaße des eigentlichen Durchflussmessers. Dabei werden seine hohen messtechnischen Eigenschaften sichergestellt.

Die Umsetzung von zwei Messverfahren ermöglicht die Messungen von Strömungsgeschwindigkeit und Fluiddurchfluss in einem großen Durchflussbereich. So sorgt z. B. das Hitzdraht-Messverfahren für hochpräzise Messungen in Strömungsgeschwindigkeitsbereichen zwischen 0,03 und 0,5 m/s. Das Ultraschallverfahren kann die Durchflussmessungen in einem Geschwindigkeitsbereich zwischen 0,1 und 30 m/s sicherstellen. Somit kann das Minimal-Maximal-Verhältnis der messbaren Durchflüsse bis zu 1:1000 erreichen. Ein weiterer Vorteil der Umsetzung der zwei Verfahren ist die Möglichkeit, die nach verschiedenen Verfahren ermittelten Messdaten zu vergleichen. Das passiert im Mittelteil der Bereiche, wo beide Verfahren wirksam sind.

Die von den Strömungswächtern mit unterschiedlichen Messverfahren eingehenden Messsignale werden von einem Elektronikmodul des Durchflussmessers empfangen und ausgewertet. Danach wird ein Signal erzeugt, welches zum Fluidstrom proportional ist. Die Auswahl des Messverfahrens während der Arbeit des Durchflussmessers je nach Strömungsgeschwindigkeit sowie die Auswertung und die Aufnahme (Speicherung) der Messergebnisse erfolgen im Elektronikmodul des Durchflussmessers gemäß den darin gespeicherten Algorithmen.

Fig. 3 zeigt eine zweite Ausgestaltung des Großbereich-Durchflussmessers in einer Einschnittbaugruppe, wobei das Elektronikmodul, der Grobfilter, das Sperrventil, der Fluidleckage-Erkennungssensor sowie die Strömungsaufbereitungseinrichtung 8 und die Anpassungseinheit 7 im Übergang vom Einlasskanal 9 zum Innenraum 2 bzw. vom Innenraum 2 zum Auslasskanal 10 nicht dargestellt sind. Bei dieser Ausgestaltung wird eine Einschnittbaugruppe (ein Rohrleitungsstück mit Flanschen) als Gehäuse 1 eingesetzt. Diese Einschnittbaugruppe bildet den Innenraum 2. In der Mitte des Innenraums 2 befindet sich der kugelförmige gewölbte Teil 3, worin der Ultraschall-Strömungswächter 4 angeordnet ist. Der zweite Ultraschall-Strömungswächter 5 ist nach dem Strömungswächter 6 (im Sinn der Strömungsrichtung) und zwar an seiner Austrittsöffnung angeordnet. Die Wirkungsweise dieser Ausgestaltung des Durchflussmessers ist mit der Ausgestaltung gemäß Fig. 1 völlig identisch. Die messbare Strömung fließt über den Einlasskanal 9 in den Innenraum 2 hinein, dessen Durchmesser den des Einlasskanals 9 mehrfach überschreitet. Dabei wird sie von Strömungsaufbereitungseinrichtung 8 zerschnitten. Danach umströmt die Strömung den nach innen gewölbten Teil 3, passiert den Strömungswächter 6 und fließt über die Anpassungseinheit 7 durch den Auslasskanal 10 aus dem Durchflussmesser hinaus. Die Fluiddurchflussmessung kann nach einem der Verfahren je nach Strömungsgeschwindigkeit erfolgen.

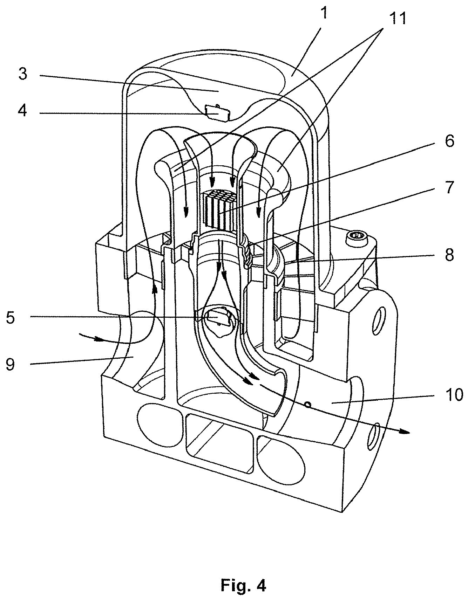

Fig. 4 zeigt eine Ausgestaltung des Großbereich-Durchflussmessers, wo der Strömungswächter 6 innerhalb eines zusätzlichen Rohres 11 angeordnet ist. Das Rohr 11 dient als Durchströmungs-Umlaufkanal für das messbare Fluid. Die Wirkungsweise dieser Ausgestaltung des Durchflussmessers und sein grundsätzlicher Aufbau sind ansonsten mit der Ausgestaltung gemäß Fig. 1 völlig identisch. Das Rohr 11 hat eine trichterförmige Öffnung, die der Öffnung des Strömungswächters 6 ähnlich ist.

Bei dieser Ausgestaltung des Messers kommt das messbare Fluid zuerst in den Einlasskanal 9; fließt durch die Strömungsaufbereitungseinrichtung 8 und dann über den Raum entlang, der durch die Innenfläche der Wände des Gehäuses 1 und die Außenfläche des Strömungswächters 6 gebildet ist, umströmt den nach innen gewölbten Teil 3, indem es seiner Geometrie (Form) folgt. Danach spaltet sich die Fluidströmung auf. Ein Teil der Strömung, wie es auch in der vorherigen Ausgestaltung der Fall ist, fließt durch das Innere des Strömungswächters 6 und tritt über den Auslasskanal 10 des Durchflussmessers hinaus. Der andere Teil der Strömung fließt über den zusätzlichen Umlaufkanal. Bei diesem Umlaufkanal handelt es sich um einen Raum, welcher zwischen der Außenfläche des Strömungswächters 6 und der Innenfläche des zusätzlichen Rohres 11 gebildet ist. Dieser zusätzliche Umlaufkanal ist dann vorteilhaft, wenn der Bereich der zu messenden Strömung entweder wesentlich erweitert oder verschoben sein muss, ohne dass die Baugröße des Strömungswächters 6 und die Konstruktion der Durchflussrohre verändert wird.

Als zusätzliche alternative Ausgestaltungen des Großbereich-Fluiddurchflussmessers sind folgenden Ausführungen möglich:
- Durchflussmesser, in dem zwei gleiche Durchflussmessverfahren eingesetzt werden;
- eine vereinfachte Ausführung mit nur einem Verfahren zur Messung der Strömungsgeschwindigkeit. In diesem Fall wird ein hohles Rohr mit der gleichen Form (Konfiguration) wie beim Strömungswächter (6) eingebaut anstelle des Strömungswächters.

Solche vereinfachten Ausgestaltungen sind möglich, wenn der Verbraucher keinen großen Durchflussmessbereich benötigt.

Die Erfindung hat folgende Vorteile:
- das Vorhandensein des entweder nach innen gewölbten Teils 3 in der Mitte eines der Böden oder des in der Nähe eines der Böden angeordneten gewölbten, kugelförmigen Teils 3 innerhalb des Innenraums 2 des Fluidzählers stellt dank seiner Geometrie (Glocken-, Kugel- oder Tropfenform) die Verengung und die Bildung der Strömung in Zentralbereich des Innenraums 2 am Eintritt des Durchflussmesser 6 sowie die Erhöhung der Bewegungsgeschwindigkeit der Strömung sicher;
- das Vorhandensein der Anpassungseinheit 7 ermöglicht es einen Volumenstrommesser oder einen Geschwindigkeitsmesser beliebigen Fabrikats mit einer beliebigen Wirkungsweise und mit verschiedenen Anschlußmaßen als Durchflussmesser 6 einzusetzen;
- die Anwendung von Durchflussmessern 6, die nach verschiedenen Messverfahren (Wirkungsweisen) funktionieren, ermöglicht die Wahl solcher Baugrößen der Durchflussmessers 6, die eine große Querschnittsfläche des Innenraums 2 sicherstellen;
- eine große Querschnittsfläche des Innenraums 2 sorgt für unbedeutende Fluiddruckverluste im Zähler;
- da die Querschnittsfläche des Innenraums 2 des Durchflussmessers mehrfach (optimalerweise mindestens 10-mal) die des Einlasskanals 9 des Zählers und der Eintrittsöffnung des Durchflussmessers 6 überschreitet, vermindert die Strömung des zu messenden Mediums seine Bewegungsgeschwindigkeit wesentlich, nachdem es über die Einlasskanal 9 in den Innenraum 2 gelangt. Im Endeffekt wird die Strömung gleichmäßiger und ruhiger. Danach fließt die Strömung durch den Durchflussmesser, dessen Durchmesser mehrfach kleiner als der Durchmesser des Innenraums 2 ist, und erhöht seine Bewegungsgeschwindigkeit. Das schafft günstigere Bedingungen für hochpräzise Messungen der Strömungsgeschwindigkeit und vermindert zusätzlich den Einfluss der äußeren Störfaktoren;
- da der beanspruchte Durchflussmesser Strömungswächter 4, 5, 6 mit zwei unterschiedlichen Fluiddurchflussmessverfahren und mit einer gemeinsamen Messstrecke aufweist, die innerhalb des Innenraums 2 kompakt angeordnet sind, wird ein großer Messbereich mit einem Minimal-Maximal-Verhältnis des messbaren Durchflusses von 1:1000 und mehr erreicht.

Der Durchflussmesser für Flüssigkeiten und Gase mit einem wesentlich erweiterten Messbereich ist somit das Ergebnis der vorliegenden Erfindung. Dieser Durchflussmesser stellt hohe messtechnische Eigenschaften sicher. Dabei ist der Durchflussmesser kompakt gestaltet, weist kleine Abmessungen auf und ist gegen Störungen des messbaren Fluids am Einlass unempfindlich. Die Anwendung von zwei Messverfahren (Messprinzipien) macht es auch möglich die Funktion des Durchflussmessers zu prüfen. Dafür werden diese zwei Verfahren im mittleren Teil des Bereichs verglichen, wo die nach unterschiedlichen Verfahren erhaltenen Messergebnisse sich überlappen. Das stellt eine höhere Sicherheit der Messdaten sicher.

### Bezugszeichenliste

- 1: Gehäuse
- 2: Innenraum
- 3: Nach innen gewölbter Teil
- 4: Ultraschall-Strömungswächter
- 5: Ultraschall-Strömungswächter
- 6: Strömungswächter mit einer anderen Wirkungsweise
- 7: Anpassungseinheit
- 8: Strömungsaufbereitungseinrichtung
- 9: Einlasskanal
- 10: Auslasskanal
- 11: Rohr

## Patentansprüche

1. Fluiddurchflussmesser mit einer Messstrecke für Strömungswächter (4, 5, 6) mit unterschiedlichen Messverfahren für Strömungsgeschwindigkeit und Fluiddurchfluss, der folgende bauliche Komponenten aufweist:
- ein Gehäuse (1) mit einer zur Geometrie eines Strömungswächters (6) komplementären Form seines Innenraums (2), zwei den Innenraum (2) zumindest teilweise begrenzende Böden und einen im Innenraum (2) befindlichen gewölbten Teil (3) mit einer Geometrie, der eine Strömungsausbildung sicherstellt,
- mindestens einen Ultraschall-Strömungswächter (4, 5), der innerhalb des Gehäuses (1) des Durchflussmessers so angeordnet ist, dass die Messstrecke durch einen Innenteil eines weiteren Strömungswächters (6) läuft,
- einen Strömungswächter (6) mit einer anderen Wirkungsweise, der im Gehäuse (1) des Fluiddurchflussmessers eingebaut ist,
- eine Anpassungseinheit (7) zur Anpassung verschiedener Durchmesser des Strömungswächters (6) und der Austrittsöffnung des Durchflussmessers,
- einen Einlasskanal (9) für die Strömung des in den Durchflussmesser fließenden und zu messenden Fluids,
- einen Auslasskanal (10) für die Strömung des aus dem Durchflussmesser fließenden Fluids.

2. Fluiddurchflussmesser nach Anspruch 1,
**dadurch gekennzeichnet,**
**dass** der Innenraum (2) des Gehäuses (1) die Form eines Zylinders, einer elliptischen Röhre oder eines Quaders mit einer Abrundung eines seiner Böden aufweist und
**dass** die Querschnittsfläche des Innenraums (2) dabei mehrfach größer als die Querschnittsfläche des Einlasskanals (9) des Durchflussmessers und der Austrittsöffnung des Strömungswächters (6) ist.

3. Fluiddurchflussmesser nach Anspruch 2,
**dadurch gekennzeichnet,**
**dass** der Innenraum (2) in der Mitte des Bodens mit der Abrundung entweder einen im Boden nach innen gewölbten Teil (3) in Form einer Glocke oder einen in der Nähe des Bodens angeordneten gewölbten Teil (3), der kugelförmig ist, aufweist.

4. Fluiddurchflussmesser nach Anspruch 1,
**dadurch gekennzeichnet,**
**dass** der erste Ultraschall-Strömungswächter (4) innerhalb des gewölbten Teils (3) angeordnet ist und/oder sich der zweite Ultraschall-Strömungswächter (5) im unteren Teil des Innenraums nach der Austrittsöffnung des Strömungswächters (6) befindet und
**dass** der/die Ultraschall-Strömungswächter (4, 5) dabei so angeordnet ist/sind, dass ein akustischer Kanal über die Mittelachse des Strömungswächters (6) läuft.

5. Fluiddurchflussmesser nach Anspruch 1,
**dadurch gekennzeichnet,**
**dass** der Strömungswächter (6) ein Signal aufbereitet, das zur Strömungsgeschwindigkeit proportional ist,
**dass** der Strömungswächter (6) entlang der Mitte der Achse des Innenraums (2) angeordnet ist und
**dass** als Strömungswächter (6) beliebige bekannte Verdrängungs- oder Massenmesser für Durchflussmengen- oder Strömungsgeschwindigkeitsmessungen beliebiger Funktionsweise eingesetzt werden können, deren Baugrößen denen des Innenraums (2) entsprechen.

6. Fluiddurchflussmesser nach Anspruch 1,
**dadurch gekennzeichnet,**
**dass** seine Wirkungsweise auf Anwendung von zwei unterschiedlichen Messverfahren beruht, wobei eines davon im unteren und das andere im oberen Teil des Durchflussmessbereichs besonders wirksam ist,
**dass** dadurch ein großer Messbereich mit einem Minimal-Maximal-Verhältnis des messbaren Durchflusses von 1:1000 und mehr erreicht wird und
**dass** die Anwendung von zwei Messverfahren es auch ermöglicht, die Funktion des Durchflussmessers zu prüfen, wofür diese zwei Verfahren im mittleren Teil des Bereichs verglichen werden, in dem sich die nach den unterschiedlichen Verfahren erhaltenen Messergebnisse überlappen.

7. Fluiddurchflussmesser nach Anspruch 1,
**dadurch gekennzeichnet,**
**dass** ein Rohr (11) einen zusätzlichen Durchströmungs-Umlaufkanal bildet, welcher zwischen der Außenfläche des Strömungswächters (6) und der Innenfläche des zusätzlichen Rohres (11) gebildet ist, wodurch die Strömung des zu messenden Fluids aufgeteilt ist, wobei ein Teil der Strömung durch das Innere des Strömungswächters (6) fließt und ein anderer Strömungsteil den Durchströmungs-Umlaufkanal passiert.

8. Fluiddurchflussmesser nach Anspruch 2,
**dadurch gekennzeichnet,**
**dass** die Anpassungseinheit (7) im Innenraum (2) in der Mitte des Bodens des Gehäuses (1) angeordnet ist, der dem Boden mit der Abrundung entgegengesetzt ist.

9. Fluiddurchflussmesser nach Anspruch 1,
**dadurch gekennzeichnet,**
**dass** eine Strömungsaufbereitungseinrichtung (8) am Boden des Innenraums (2) angeordnet ist und
**dass** die Strömungsaufbereitungseinrichtung (8) die Form eines Gitters aufweist.

10. Fluiddurchflussmesser nach einem der vorherigen Ansprüche,
**dadurch gekennzeichnet,**
**dass** das Gehäuse (1) einen Fluidleckage-Erkennungssensor aufweist, der in elektrischer Verbindung mit einem Elektronikmodul und/oder einem Sperrventil ist.

11. Fluiddurchflussmesser nach einem der vorherigen Ansprüche,
**dadurch gekennzeichnet,**
**dass** der Einlass des Strömungswächters (6) eine trichterförmige Form aufweist und in fluidstrombildender Verbindung mit dem gewölbten Teil (3) steht.

12. Fluiddurchflussmesser nach einem der vorherigen Ansprüche,
**dadurch gekennzeichnet,**
**dass** der Strömungswächter (6) und die Anpassungseinheit (7) anpassbar sind, wobei die Anpassungseinheit (7) entsprechend dem verwendeten Strömungswächter (6) anpassbar ist.

13. Fluiddurchflussmesser nach einem der vorherigen Ansprüche,
**dadurch gekennzeichnet,**
**dass** im Einlasskanal (9) ein Grobfilter angeordnet ist.
